# EUROPÄISCHE PATENTSCHRIFT

(11) **EP 3 702 257 B1**
(45) Veröffentlichungstag und Bekanntmachung des Hinweises auf die Patenterteilung: **15.12.2021**
(21) Anmeldenummer: 19160065.9
(22) Anmeldetag: 28.02.2019
(51) Int. Cl.: B62J 25/00, B62K 23/08, B62L 3/04

(54) **FAHRZEUG MIT EINEM BEDIENELEMENT ZUM BESCHLEUNIGEN UND BREMSEN**
VEHICLE WITH AN OPERATING ELEMENT FOR ACCELERATING AND BRAKING
VÉHICULE DOTÉ D'UN ÉLÉMENT DE COMMANDE PERMETTANT D'ACCÉLÉRER ET DE FREINER

(43) Veröffentlichungstag der Anmeldung: 02.09.2020
(73) Patentinhaber: Brake Force One GmbH, 72074 Tübingen (DE); Skoda Auto A.S., 293 01 Mladá Boleslav (CZ)
(72) Erfinder: Lauhoff, Jakob, 72070 Tübingen (DE); Dobler, Leo, 74336 Brackenheim (DE); Voitl, Peter, 75179 Pforzheim (DE); Kleindienst, Niels, 10437 Berlin (DE); Günderen, Aykut, 15800 Praha (CZ)
(74) Vertreter: Kohler Schmid Möbus Patentanwälte

(56) Entgegenhaltungen:
- EP-A1- 2 617 636
- DE-A1- 19 855 585
- US-A1- 2002 134 604

## Beschreibung

Die Erfindung betrifft ein Fahrzeug mit einem Elektromotor, zumindest einem mittels des Elektromotors antreibbaren Rad und zumindest einem weiteren Rad, sowie einem Bedienelement, gemäß dem Oberbegriff von Anspruch 1.

Elektrisch betriebene zweirädrige Fahrzeuge, beispielsweise Elektroroller, weisen in der Regel einen Gasgriff zum Beschleunigen auf. Zur Verzögerung stehen diesen Fahrzeugen zwei unabhängig ansteuerbare hydraulische Bremsen zur Verfügung, wobei eine Bremse auf das Vorderrad und eine Bremse auf das Hinterrad wirkt. Es werden also drei Bedienelemente benötigt, um zu beschleunigen und zu bremsen. Dies überfordert viele Benutzer, wodurch es zu Unfällen wegen Überbremsung bzw. Unterbremsung kommen kann.

Problematisch ist dabei insbesondere, dass beide Bremsen gleichzeitig in einem sinnvollen Verhältnis betätigt werden müssen und gleichzeitig der Schwerpunkt nach hinten verlagert werden muss.

Auch bei E-Bikes ist es in der Regel so, dass zur Ansteuerung des Elektromotors die Pedale dienen, während zum Bremsen zwei hydraulische Bremsen mit jeweils zugeordnetem Bedienelement vorgesehen sind.

Aus der EP 2 617 636 A1 ist ein Fahrrad bekannt, dessen Vorderrad über einen Elektromotor antreibbar ist. Das Hinterrad verfügt über eine Bremsanordnung. Der Elektromotor und die Bremsanordnung sind über ein Bedienelement betätigbar.

Die DE 198 55 585 A1 offenbart ein Leichtfahrzeug mit einem Hybridantrieb aus Elektro-Muskelkraftantrieb. Das Leichtfahrzeug weist eine Tretkurbel auf, über die sowohl der Elektromotor als auch eine Bremse betätigbar sind.

Die US 2002/0134604 A1 offenbart einen Roller, dessen Bremshebel sowohl zur Bremsung eines Vorderrads als auch zur Steuerung eines Antriebs des Hinterrads ausgelegt ist.

Aufgabe der vorliegenden Erfindung ist es, ein Fahrzeug mit einem Elektromotor bereitzustellen, welches einfacher bedient werden kann. Gelöst wird diese Aufgabe erfindungsgemäß durch ein Fahrzeug mit einem Elektromotor mit den Merkmalen des Anspruchs 1. Somit ist nur noch ein Bedienelement notwendig, um das Fahrzeug anzutreiben, insbesondere zu beschleunigen, und zu bremsen. Eine Fehlbedienung wird dadurch weitestgehend ausgeschlossen.

Bei dem erfindungsgemäßen Fahrzeug kann es sich um ein Zweirad handeln. Es ist jedoch grundsätzlich auch denkbar, dass es sich bei dem erfindungsgemäßen Fahrzeug um ein Fahrzeug mit drei oder vier Rädern handelt.

Besondere Vorteile ergeben sich, wenn das Bedienelement in zumindest zwei Bewegungsrichtungen bewegbar an dem Fahrzeug angeordnet ist, wobei bei einer Bewegung des Bedienelements in eine erste Bewegungsrichtung der Elektromotor zur Erzeugung eines Antriebsmoments und bei einer Bewegung des Bedienelements in eine zweite Bewegungsrichtung, die vorzugsweise der ersten Bewegungsrichtung entgegengerichtet ist, sowohl der Elektromotor als auch die Bremsanordnung zur Erzeugung eines Bremsmoments angesteuert werden. Durch diese Maßnahme ist ein gleichzeitiges Gasgeben und Bremsen unmöglich. Das Beschleunigen und Bremsen wird für einen Benutzer erheblich vereinfacht. Außerdem können Kosten gespart werden, da für ein solches Fahrzeug eine komplette Bremsanordnung wegfällt. Es ist nur noch eine auf das weitere, insbesondere nicht antreibbare, Rad wirkende Bremsanordnung notwendig. Die Bremsung an dem anderen Rad, welches mit dem Elektromotor in Wirkverbindung steht, kann über den Elektromotor erfolgen. Die beiden Bremsen, insbesondere die Motorbremse als auch die Bremsanordnung, können besonders gut aufeinander abgestimmt werden, sodass ein Über- und Unterbremsen verhindert werden kann. Wenn der Elektromotor zur Erzeugung eines Bremsmoments betrieben wird, kann er im Wesentlichen als Generator betrieben werden. Dies kann genutzt werden, einen am Fahrzeug vorhandenen Akkumulator aufzuladen.

Das Bedienelement ist als Fußpedal ausgebildet oder weist ein solches auf und ist schwenkbar an dem Fahrzeug, insbesondere am Rahmen des Fahrzeugs, angeordnet. Insbesondere kann das Fußpedal in seinem Mittenbereich schwenkbar gelagert werden, sodass Schwenkbewegungen in entgegengesetzte Richtungen durchgeführt werden können. Dabei kann insbesondere vorgesehen sein, dass ein Beschleunigen des Fahrzeugs erfolgt, wenn das Fußpedal mit seinem der Vorderseite des Fahrzeugs zugewandten Ende nach unten gedrückt wird bzw. verschwenkt wird und ein Bremsen erfolgt, wenn das Fußpedal in entgegengesetzte Richtung verschwenkt wird. Durch das Nachhintenschwenken der Fußpedale ergibt sich auch eine leichte Körperverlagerung des Benutzers. So kann verhindert werden, dass es aufgrund von falscher Gewichtsverlagerung zu Unfällen kommt.

Besonders vorteilhaft ist es in diesem Zusammenhang, wenn das Bedienelement zwei über eine Achse starr verbundene Pedale aufweist. Ein Benutzer kann somit auf beiden Pedalen stehen und diese zum Beschleunigen und Bremsen in dieselbe Richtung verlagern. Wird demnach eine Bremsung durchgeführt, können beide Pedale, wenn man von der Seite auf das Fahrzeug schaut, entgegen dem Uhrzeigersinn verschwenkt werden. Dadurch werden die Fußspitzen eines Benutzers nach oben gerichtet, was zu einer günstigen Gewichtsverlagerung führt.

Besonders vorteilshaft ist es, wenn die dem weiteren Rad, insbesondere dem nicht angetriebenen Rad, zugeordnete Bremsanordnung als mechanische Bremsanordnung, insbesondere als hydraulische Bremsanordnung, ausgebildet ist. Mit einer solchen Bremsanordnung kann zuverlässig ein Bremsmoment aufgebracht werden. Die mechanische Bremsanordnung und die Motorbremse können redundant funktionsfähig sein und durch dasselbe Bedienelement bedient werden.

Die Bremsanordnung kann eine Regelung für das Bremsmoment, insbesondere ein ABS-System, umfassen. Somit kann ein Blockieren des nicht angetriebenen Rads, insbesondere des Vorderrads, verhindert werden und dadurch Stürze vermieden werden. Ein Überbremsen des nicht angetriebenen Rads kann dadurch wirksam verhindert werden.

Um Beschädigungen an der Bremsanordnung zu vermeiden, kann ein Bremszylinder der Bremsanordnung in einem Rahmen des Fahrzeugs angeordnet sein. Auch können wesentliche Teile des Bedienelements im Rahmen des Fahrzeugs angeordnet sein und somit vor Beschädigungen geschützt sein. Dadurch wird die Betriebssicherheit des Fahrzeugs erhöht.

Eine besonders gute Kraftübertragung auf das angetriebene Rad ergibt sich, wenn der Elektromotor als Nabenmotor ausgebildet ist.

Bei einer besonders bevorzugten Ausführungsform kann vorgesehen sein, dass ein Sensor zur Erfassung der Stellung und/oder Bewegung des Bedienelements vorgesehen ist, der signaltechnisch mit einer Steuerung, insbesondere einer Leistungselektronik, des Elektromotors verbunden ist. Durch den Sensor kann demnach die Stellung und/oder Bewegung des Bedienelements erfasst werden und somit erkannt werden, ob das Bedienelement in einer ersten oder zweiten Richtung bewegt wird und entsprechend kann der Elektromotor zur Bremsung oder Beschleunigung angesteuert werden. Je weiter das Bedienelement dabei in die erste Bewegungsrichtung bewegt wird, umso stärker kann ein Antriebsmoment erzeugt werden. Entsprechend kann ein Bremsmoment in Abhängigkeit von der in die zweite Bewegungsrichtung durchgeführten Bewegung des Bedienelements erzeugt werden. Der Sensor kann dabei drahtgebunden mit der Steuerung des Elektromotors verbunden sein oder drahtlos. Die Steuerung des Elektromotors kann insbesondere eine Regelung umfassen. Somit kann auch das Bremsmoment geregelt werden und kann eine Überbremsung und Unterbremsung vermieden werden. Der Sensor kann z. B. am Bedienelement, z. B. dessen Achse, oder an einem Bremszylinder der Bremsanordnung angeordnet sein.

Eine platzsparende Anordnung der Steuerung ergibt sich, wenn sie im oder am Elektromotor angeordnet ist.

Weitere Vorteile ergeben sich, wenn Rückstellelemente zur Rückstellung des Bedienelements nach einer Auslenkung aus einer Ausgangsstellung vorgesehen sind. Für jede Bewegungsrichtung ist ein die Bewegung des Bedienelements begrenzender Anschlag vorgesehen. Dadurch kann die Verkehrssicherheit erhöht werden, da ein Benutzer ein ein Pedal aufweisendes Bedienelement nicht beliebig weit verschwenken kann und somit vermieden werden kann, dass der Fuß eines Benutzers vom Bedienelement abrutscht.

Wie oben bereits erwähnt, kann die Erfindung bei unterschiedlichsten Fahrzeugen zum Einsatz kommen. Besonders bevorzugt ist es jedoch, wenn das Fahrzeug als Einspurfahrzeug ausgebildet ist.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

Es zeigen:
- Fig. 1: eine perspektivische Darstellung eines erfindungsgemäßen Fahrzeugs;
- Fig. 2: einen Ausschnitt des Rahmens des Fahrzeugs, wobei ein Teil des Rahmens ausgeblendet ist, um einen Blick auf den Innenraum des Rahmens freizugeben.

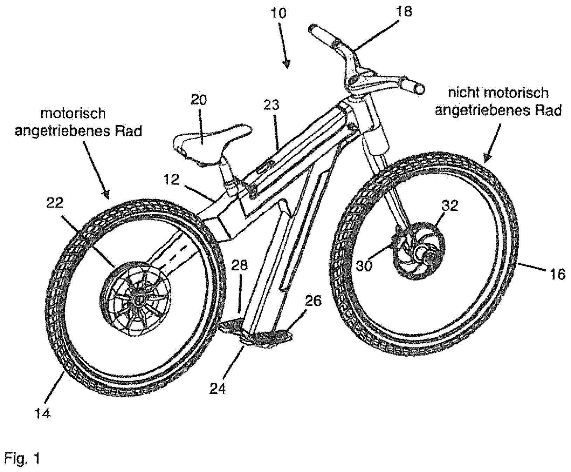

Die Figur 1 zeigt ein erfindungsgemäßes Fahrzeug 10, welches einen Rahmen 12, ein angetriebenes bzw. antreibbares Rad 14, ein weiteres Rad 16, das insbesondere nicht angetrieben sein kann, ein als Lenker ausgebildetes Lenkmittel 18, mit dem das Vorderrad, hier das nicht angetriebene weitere Rad 16, gelenkt werden kann, sowie einen Sattel 20 aufweist. Je nach Ausgestaltung des erfindungsgemäßen Fahrzeugs 10 kann das Lenkmittel 18 auch anderweitig ausgebildet sein, beispielsweise als Lenkrad. Der Sattel 20 ist kein zwingender Bestandteil des erfindungsgemäßen Fahrzeug 10. Beispielsweise kann ein Benutzer auch auf dem Fahrzeug stehen. Alternativ kann eine andere Sitzeinrichtung vorgesehen sein.

Das antreibbare Rad 14 ist mit einem als Nabenmotor ausgebildeten Elektromotor 22 wirkverbunden. Der Elektromotor 22 bezieht seine Leistung aus einem am Rahmen 12 angeordneten Akkumulator 23. Zur Ansteuerung des Elektromotors 22 ist ein Bedienelement 24 vorgesehen. Im gezeigten Ausführungsbeispiel weist das Bedienelement 24 zwei Pedale 26, 28 auf, die durch eine Achse starr miteinander verbunden sind und über die Achse schwenkbar mit dem Rahmen 12 bzw. einem Körper des Fahrzeugs 10 verbunden sind. Dem weiteren Rad 16 ist eine Bremsanordnung zugeordnet. Von der Bremsanordnung sind in der Figur 1 eine Bremszange 30 und eine Bremsschreibe 32 zu erkennen.

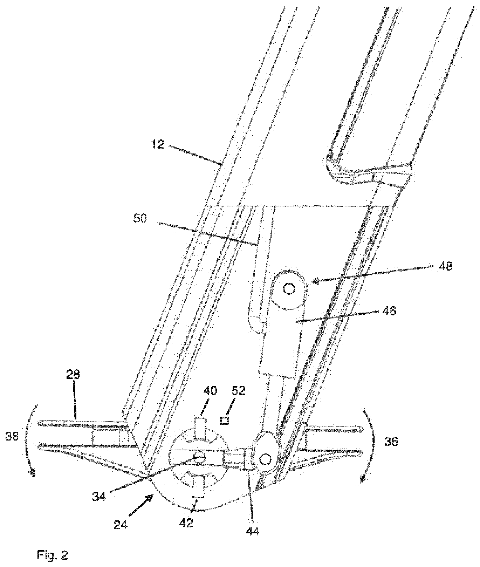

In der Figur 2 ist der untere Teil des Rahmens 12 gezeigt, wobei ein Teil des zumindest abschnittsweise hohlen Rahmens 12 ausgeblendet ist. Dadurch ist zu erkennen, dass das als Pedal 28 an der Achse 34 angeordnet ist. Dadurch ist das Bedienelement 24 zum einen in eine erste Bewegungsrichtung 36 und zum anderen in eine zweite Bewegungsrichtung 38 um die Achse 34 verschwenkbar. Die Bewegungen in Bewegungsrichtungen 36, 38 werden jeweils durch einen Anschlag 40, 42 begrenzt. Das Bedienelement 24 ist über einen Bremshebel 44 mit einem Bremszylinder 46 gekoppelt. Der Bremszylinder 46 und der Bremshebel 44 sind wie der Bremssattel 30 und die Bremsscheibe 32 Bestandteil einer Bremsanordnung 48. Vom Bremszylinder 46 führt eine Hydraulikleitung 50, die ebenfalls zur Bremsanordnung 48 gehört, zu dem Bremssattel 30. Bei einer Bewegung des Bedienelements 24 in Bewegungsrichtung 38 wird die Bremsanordnung 48 aktiviert. Insbesondere wird ein Bremsdruck im Bremszylinder 46 erzeugt, der dazu führt, dass in der Bremszange 30 angeordnete Bremsbeläge gegen die Bremsscheibe 32 gedrückt werden. Die Bremsanordnung 48 weist eine nicht näher dargestellte Bremsregelung auf, die ein ABS-System umfasst. Ein entsprechendes ABS-System ist beispielsweise in der EP 2 985 198 A1 offenbart.

Dadurch, dass Teile der Bremsanordnung 48 im Rahmen 12 angeordnet sind, sind diese vor Beschädigungen geschützt.

Weiterhin wird durch den Sensor 52, der hier nur symbolisch eingezeichnet ist und geeignet positioniert ist, die Bewegung bzw. Stellung des Bedienelements 24 erfasst. Der Sensor 52 steht signaltechnisch mit einer Steuerung des Elektromotors 22, die als Leistungselektronik ausgebildet sein kann, in Verbindung. Wird demnach durch den Sensor 52 erkannt, dass das Bedienelement 24 in Bewegungsrichtung 36 bewegt wird, so wird der Elektromotor 22 zur Erzeugung eines Antriebsmoments angesteuert. Dadurch kann das Fahrzeug 10 beschleunigt bzw. eine Geschwindigkeit gehalten werden. Wird durch den Sensor 52 erfasst, dass das Bedienelement 24 in Bewegungsrichtung 38 bewegt wird, so wird der Elektromotor 22 zur Erzeugung eines Bremsmoments angesteuert.

Dadurch erfolgt eine Bremsung des Rads 14. Eine mechanische, insbesondere hydraulische Bremse für das Rad 14 kann entfallen.

Wie sich aus der vorstehenden Beschreibung ergibt, wird bei einer Bewegung des Bedienelements 24 in Bewegungsrichtung 38 gleichzeitig eine Bremsung des Rads 14 sowie des Rads 16 ausgelöst. Bei einer Bewegung des Bedienelements 24 in Bewegungsrichtung 36 wird ausschließlich der Elektromotor zur Erzeugung eines Antriebsmoments angesteuert. Somit können die Bremsen und der Motor zur Erzeugung eines Antriebsmoments durch dasselbe Bedienelement 24 angesteuert werden. Eine Fehlbedienung ist ausgeschlossen. Eine Bremsung ist nur möglich, wenn kein Antriebsmoment erzeugt wird. Der Sensor 52 kann drahtgebunden oder drahtlos mit der Steuerung des Elektromotors 22 kommunizieren. Die Steuerung des Motors 22 kann im oder am Elektromotor 22 angeordnet sein. Durch die Steuerung kann auch eine Regelung des Bremsmoments erfolgen, sodass die Bremsung des Rads 14 und des Rads 16 aufeinander abgestimmt werden können.

Die in der Figur 2 gezeigten Ausgangsstellung des Bedienelements 24 wird durch nicht eingezeichnete Rückstellelemente, z. B. Federn, eingestellt. Aus dieser Stellung kann das Bedienelement durch Einwirkung eines Benutzers verstellt werden, um zu beschleunigen oder zu bremsen.

## Patentansprüche

1. Fahrzeug (10) mit einem Elektromotor (22), zumindest einem mittels des Elektromotors (22) antreibbaren Rad (14) und zumindest einem weiteren Rad (16), sowie einem Bedienelement (24), wobei durch das Bedienelement (24) sowohl der Elektromotor (22) als auch eine dem weiteren Rad (16) zugeordnete Bremsanordnung (48) ansteuerbar sind und das Bedienelement (24) als Fußpedal (26, 28) ausgebildet ist oder ein solches aufweist und schwenkbar an dem Fahrzeug (10), insbesondere einem Rahmen (12) des Fahrzeugs (10), angeordnet ist, **dadurch gekennzeichnet, dass** für jede Bewegungsrichtung (36, 38) eine die Bewegung des Bedienelements (24) begrenzender Anschlag (40, 42) vorgesehen ist.

2. Fahrzeug nach Anspruch 1, **dadurch gekennzeichnet, dass** das Bedienelement (24) in zumindest zwei Bewegungsrichtungen (36, 38) bewegbar an dem Fahrzeug (10) angeordnet ist, wobei bei einer Bewegung des Bedienelements (24) in eine erste Bewegungsrichtung (36) der Elektromotor (22) zur Erzeugung eines Antriebsmoments und bei einer Bewegung des Bedienelements (24) in eine zweite Bewegungsrichtung (38) der Elektromotor (22) und die Bremsanordnung (48) zur Erzeugung eines Bremsmoments angesteuert werden.

3. Fahrzeug nach Anspruch 1 oder 2, **dadurch gekennzeichnet, dass** das Bedienelement zwei über eine Achse starr verbundene Pedale aufweist.

4. Fahrzeug nach einem der vorhergehenden Ansprüche, **dadurch gekennzeichnet, dass** die Bremsanordnung (48) als mechanische, insbesondere hydraulische, Bremsanordnung (48) ausgebildet ist.

5. Fahrzeug nach einem der vorhergehenden Ansprüche, **dadurch gekennzeichnet, dass** die Bremsanordnung (48) eine Regelung für das Bremsmoment, insbesondere ein ABS-System, umfasst.

6. Fahrzeug nach einem der vorhergehenden Ansprüche, **dadurch gekennzeichnet, dass** die Bremsanordnung (48) einen Bremszylinder (46) aufweist, der in einem Rahmen (12) des Fahrzeugs (10) angeordnet ist.

7. Fahrzeug nach einem der vorhergehenden Ansprüche, **dadurch gekennzeichnet, dass** der Elektromotor (22) als Nabenmotor ausgebildet ist.

8. Fahrzeug nach einem der vorhergehenden Ansprüche, **dadurch gekennzeichnet, dass** ein Sensor (52) zur Erfassung der Stellung und/oder Bewegung des Bedienelements (24) vorgesehen ist, der signaltechnisch mit einer Steuerung, insbesondere Leistungselektronik, des Elektromotors (22) verbunden ist.

9. Fahrzeug nach Anspruch 8, **dadurch gekennzeichnet, dass** die Steuerung im oder am Elektromotor (22) angeordnet ist.

10. Fahrzeug nach einem der vorhergehenden Ansprüche, **dadurch gekennzeichnet, dass** Rückstellelemente zur Rückstellung des Bedienelements (24) nach einer Auslenkung aus einer Ausgangsstellung vorgesehen sind.

11. Fahrzeug nach einem der vorhergehenden Ansprüche, **dadurch gekennzeichnet, dass** es als Einspurfahrzeug ausgebildet ist.

## Claims

1. Vehicle (10) comprising an electric motor (22), at least one wheel (14) which can be driven by means of the electric motor (22), at least one further wheel (16) and an operating element (24), both the electric motor (22) and a brake arrangement (48) associated with the further wheel (16) being actuatable by means of the operating element (24), and the operating element (24) being designed as a foot pedal (26, 28) or having such a foot pedal and being pivotably arranged on the vehicle (10), in particular on a frame (12) of the vehicle (10), **characterized in that** a stop (40, 42) which limits the movement of the operating element (24) is provided for each movement direction (36, 38).

2. Vehicle according to claim 1, **characterized in that** the operating element (24) is arranged on the vehicle (10) so as to be movable in at least two movement directions (36, 38), the electric motor (22) being actuated to generate a drive torque when the operating element (24) is moved in a first movement direction (36), and the electric motor (22) and the brake arrangement (48) being actuated to generate a braking torque when the operating element (24) is moved in a second movement direction (38).

3. Vehicle according to either claim 1 or claim 2, **characterized in that** the operating element has two pedals which are rigidly connected via an axle.

4. Vehicle according to any of the preceding claims, **characterized in that** the brake arrangement (48) is designed as a mechanical, in particular hydraulic, brake arrangement (48).

5. Vehicle according to any of the preceding claims, **characterized in that** the brake arrangement (48) comprises a closed-loop control system for the braking torque, in particular an ABS system.

6. Vehicle according to any of the preceding claims, **characterized in that** the brake arrangement (48) has a brake cylinder (46) which is arranged in a frame (12) of the vehicle (10).

7. Vehicle according to any of the preceding claims, **characterized in that** the electric motor (22) is designed as a hub motor.

8. Vehicle according to any of the preceding claims, **characterized in that** a sensor is provided (52) for detecting the position and/or movement of the operating element (24), which sensor is connected to a controller, in particular power electronics, of the electric motor (22) in terms of signaling.

9. Vehicle according to claim 8, **characterized in that** the controller is arranged in or on the electric motor (22).

10. Vehicle according to any of the preceding claims, **characterized in that** restoring elements are provided for restoring the operating element (24) after a deflection from an initial position.

11. Vehicle according to any of the preceding claims, **characterized in that** it is designed as a single-track vehicle.

## Revendications

1. Véhicule (10) comportant un moteur électrique (22), au moins une roue (14) pouvant être entraînée au moyen du moteur électrique (22) et au moins une autre roue (16), ainsi qu'un élément de commande (24), le moteur électrique (22) ainsi qu'un dispositif de freinage (48) associé à l'autre roue (16) pouvant être activés par l'élément de commande (24) et l'élément de commande (24) étant réalisé sous forme de pédale de pied (26, 28) ou en présentant une telle et étant disposé pivotant sur le véhicule (10), en particulier sur un châssis (12) du véhicule (10), **caractérisé en ce qu'**une butée (40, 42) limitant le mouvement de l'élément de commande (24) est prévue pour chaque sens de déplacement (36, 38).

2. Véhicule selon la revendication 1, **caractérisé en ce que** l'élément de commande (24) est disposé sur le véhicule (10) de manière à pouvoir être déplacé dans au moins deux sens de déplacement (36, 38), le moteur électrique (22) étant activé pour générer un couple d'entraînement lors d'un déplacement de l'élément de commande (24) dans un premier sens de déplacement (36) et le moteur électrique (22) et le dispositif de freinage (48) étant activés pour générer un couple de freinage lors d'un déplacement de l'élément de commande (24) dans un second sens de déplacement (38).

3. Véhicule selon la revendication 1 ou 2, **caractérisé en ce que** l'élément de commande présente deux pédales reliées rigidement par l'intermédiaire d'un essieu.

4. Véhicule selon l'une des revendications précédentes, **caractérisé en ce que** le dispositif de freinage (48) est réalisé sous la forme d'un dispositif de freinage (48) mécanique, en particulier hydraulique.

5. Véhicule selon l'une des revendications précédentes, **caractérisé en ce que** le dispositif de freinage (48) comprend une régulation pour le couple de freinage, en particulier un système ABS.

6. Véhicule selon l'une des revendications précédentes, **caractérisé en ce que** le dispositif de freinage (48) présente un cylindre de freinage (46) qui est disposé dans un châssis (12) du véhicule (10).

7. Véhicule selon l'une des revendications précédentes, **caractérisé en ce que** le moteur électrique (22) est réalisé sous forme de moteur moyeu.

8. Véhicule selon l'une des revendications précédentes, **caractérisé en ce qu'**un capteur (52) est prévu pour détecter la position et/ou le déplacement de l'élément de commande (24), lequel capteur est connecté par la technique des signaux à un appareil d'activation, en particulier à des équipements électroniques de puissance, du moteur électrique (22).

9. Véhicule selon la revendication 8, **caractérisé en ce que** l'appareil d'activation est disposé dans ou sur le moteur électrique (22).

10. Véhicule selon l'une des revendications précédentes, **caractérisé en ce que** des éléments de rappel sont prévus pour rappeler l'élément de commande (24) après une déviation depuis une position initiale.

11. Véhicule selon l'une des revendications précédentes, **caractérisé en ce qu'**il est réalisé sous forme de véhicule à voie unique.
